# EUROPÄISCHE PATENTSCHRIFT

(11) **EP 3 651 946 B1**
(45) Veröffentlichungstag und Bekanntmachung des Hinweises auf die Patenterteilung: **25.08.2021**
(21) Anmeldenummer: 18746568.7
(22) Anmeldetag: 11.07.2018
(51) Int. Cl.: B25J 13/08, B25J 18/00, B25J 9/16

(54) **ANORDNUNG FÜR EINEN KNICKARMROBOTER UND VERFAHREN ZUM BESTIMMEN EINER POSITIONIERUNG EINER AUFNAHME FÜR EINEN ENDEFFEKTOR EINES KNICKARMROBOTERS**
ARRANGEMENT FOR AN ARTICULATED ARM ROBOT AND METHOD FOR DETERMINING THE POSITIONING OF A MOUNT FOR AN END EFFECTOR OF AN ARTICULATED ARM ROBOT
DISPOSITIF POUR UN BRAS ROBOT ARTICULÉ ET PROCÉDÉ DE DÉTERMINATION D'UN POSITIONNEMENT D'UN LOGEMENT POUR UN EFFECTEUR TERMINAL D'UN BRAS ROBOT ARTICULÉ

(30) Priorität: 13.07.2017 DE 102017115800
(43) Veröffentlichungstag der Anmeldung: 20.05.2020
(73) Patentinhaber: Grädener, Alina, 10623 Berlin (DE); Rokeach, Leo, 14193 Berlin (DE)
(72) Erfinder: Grädener, Alina, 10623 Berlin (DE); Rokeach, Leo, 14193 Berlin (DE)
(74) Vertreter: Bittner, Thomas L.
(86) Internationale Anmeldenummer: PCT/DE2018/100635
(87) Internationale Veröffentlichungsnummer: WO 2019/011381

(56) Entgegenhaltungen:
- EP-A2- 2 732 934
- BE-A4- 1 000 768
- US-A- 4 606 696

## Beschreibung

Die Erfindung betrifft Anordnung für einen Knickarmroboter sowie ein Verfahren zum Bestimmen einer Positionierung einer Aufnahme für einen Endeffektor eines Knickarmroboters.

### Hintergrund

Knickarmroboter, die auch als Gelenkarmroboter bezeichnet werden, sind dreidimensional bewegliche Industrieroboter, deren Kinematik aus mehreren gelenkig miteinander verbundenen Armgliedern aufgebaut ist, um einen Endeffektor wie Greifer oder Werkzeug zu führen. Knickarmroboter ermöglichen eine hohe Beweglichkeit. Vertikale-Knickarmroboter basieren auf einer seriellen Kinematik, bei der jedes Armglied (Gliederelement) nur mit einem weiteren Armglied verbunden ist. Parallelkinematik-Knickarmroboter haben eine Kinematik aus mehreren parallel angeordneten Achsen, die gelenkig mit einer Greiferplattform verbunden sind.

Industrielle Knickarmroboter bestehen regelmäßig aus Gelenken mit Aktuatoren, üblicherweise Servomotoren, und Armgliedern, die diese verbinden. Die Anzahl der Gelenke wird als die Anzahl der möglichen Freiheitsgrade (Englisch "Degrees of Freedom" = DOF) oder Anzahl der Achsen genannt. Üblicherweise haben Knickarmroboter sechs oder fünf Achsen. Aufgrund des seriellen Aufbaus können Knickarmroboter flexibel eingesetzt werden. Allerdings müssen sie im Vergleich zu Parallelkinematiken sehr steif ausgelegt werden. Hinzu kommt, dass der erste Aktuator alle darauf folgenden Aktuatoren tragen muss, der zweite die ihn folgende tragen muss usw. Dies bedingt eine Konstruktion mit hoher Masse, um eine ausreichende Steifigkeit zu ermöglichen. Die Positionsgenauigkeit und die Lagegenauigkeit des Endeffektors - wird über die Positionsgeber der Aktuatoren bestimmt. Das bedeutet, dass die Verformung in den Armgliedern und Gelenken von der Regelung der Aktuatoren nicht berücksichtigt werden kann. Insbesondere haben thermische und mechanische Lasten einen bedeutenden Einfluss auf die Positionsgenauigkeit.

In Dokument EP 2 732 934 A2 ist eine Vorrichtung zum Messen einer Position eines Endeffektors offenbart. Es sind ein Gelenkarm und ein Messarm vorgesehen, die jeweils Gelenke aufweisen, welche über Gliederelemente seriell verbunden sind.

Ein Gelenkarm mit einem Endeffektor, bei dem die Gliederelemente über Gelenke miteinander verbunden sind, ist in den Dokumenten BE 1000768 A4 sowie US 4606696 A offenbart.

### Zusammenfassung

Aufgabe der Erfindung ist es, eine Anordnung für einen Knickarmroboter sowie ein Verfahren zum Bestimmen einer Positionierung einer Aufnahme für einen Endeffektor eines Knickarmroboters anzugeben, mit denen eine verbesserte Positionierung der Aufnahme für den Endeffektor sowie des Endeffektors ermöglicht ist.

Zur Lösung sind eine Anordnung für einen Knickarmroboter sowie ein Verfahren zum Bestimmen einer Positionierung oder einer Lage einer Aufnahme für einen Endeffektor eines Knickarmroboters nach den unabhängigen Ansprüchen 1 und 8 geschaffen. Alternative Ausgestaltungen sind Gegenstand von abhängigen Unteransprüchen.

Es ist eine parallele Ausbildung von Gelenkarm und Messarm vorgesehen. Wird der Gelenkarm mittels Ansteuern der Aktuatoren der Gelenke bewegt, so führt der Messarm gezwungen die gleiche Bewegung aus. Die Position und / oder Orientierung des Endes des Messarms kann anhand der von den Drehgebern in den Messarmgelenken erhaltenen Messsignalen bestimmt werden. Hieraus kann sodann die Position und / oder Orientierung des Endes des Gelenkarms mit der Aufnahme des Endeffektors bestimmt werden. Ist an der Aufnahme am Ende des Gelenkarms ein Endeffektor montiert, ist so die Bestimmung der Position und / oder Orientierung des Endeffektors ermöglicht.

Bei der vorgeschlagenen Technologie kann der Gelenkarm ausgebildet und hinsichtlich seiner Konstruktion optimiert werden, ohne dass hierbei auf ein Messsystem zur Positions- und / oder Orientierungsbestimmung Rücksicht genommen werden muss. Die Positions- und / oder Orientierungsbestimmung erfolgt mithilfe des Messarms und der zugeordneten Messeinrichtung, welche die Messsignale der Drehgeber in den Messarmgelenken auswertet. Es bestehen so keine Einschränkungen oder Hindernisse, die sich aus der Berücksichtigung eines Messsystems zur Positionsbestimmung an dem Gelenkarm üblicherweise ergeben.

Werden Position und Orientierung bestimmt, wird dies auch als Bestimmung der Pose bezeichnet.

Mit der Anordnung kann ein Vertikal-Knickarmroboter ausgebildet werden. Alternativ kann die Anordnung mit der Parallelarmstruktur mit Gelenkarm und Messarm auch für einen Nicht-Vertikal-Knickarmroboter verwendet werden, zum Beispiel einem Knickarmroboter, der an einer aufrecht stehenden Wand montiert ist.

Die Aktuatoren der Gelenke können jeweils frei von einem Drehgeber gebildet sein. Da die zur Positionsbestimmung genutzten Messsignale von den Drehgebern in den Messarmgelenken bereitgestellt sind, kann auf Drehgeber in den Gelenken des Gelenkarms verzichtet werden. Die Gelenke des Gelenkarms können so vereinfacht ausgebildet werden. Insbesondere kann eine Gewichtsreduzierung erreicht werden. Auch können die Gelenke in technischer Hinsicht weniger komplex ausgebildet werden.

Alternativ können die Aktuatoren der Gelenke jeweils einen Drehgeber aufweisen. Zum Beispiel können die Aktuatoren mit einem Servomotor gebildet sein. Die Drehgeber in den Gelenken des Gelenkarms stellen zusätzliche Messsignale bereit, wodurch wahlweise die Positionsbestimmung optimiert werden kann. Die Drehgeber in den Gelenken des Gelenkarms können an die Messeinrichtung koppeln, sodass die Messeinrichtung Messsignale der Drehgeber der Gelenke empfängt. In einer Ausführungsform kann vorgesehen sein, dass die Messsignale der Drehgeber in den Gelenken des Gelenkarms ausgewertet werden, um, unter Berücksichtigung einer Steifigkeit des Gelenkarms, eine an den Aktuatoren jeweils auftretende Last und / oder eine an der Aufnahme / am Endeffektor auftretende Last zu bestimmen. Beispielweise können Steifigkeiten des Gelenkarms mittels Drehsteifigkeiten in den Gelenken idealisiert werden. Unter Verwendung eines geeigneten Prinzips, zum Beispiel dem Prinzip der virtuellen Kräfte, kann dann ein Verformungsverhalten an dem Endeffektor bestimmt werden. Hierbei dient ein Verformungswinkel in den Gelenken als Eingabegrößen. Der Verformungswinkel ist der Differenzwinkel zwischen den Winkeln von dem Drehgeber des Messarmgelenks und dem Drehgeber des zugeordneten Gelenks des Gelenkarms.

Einem oder mehreren der nicht endseitigen Messarmglieder des Messarms und der nicht endseitigen Gliederelemente des Gelenkarms ist eine Verbindungseinrichtung zugeordnet, die eingerichtet ist, für die nicht endseitigen Messarmglieder sowie die nicht endseitigen Gliederelemente paarweise eine lösbare Verbindung auszubilden. Mithilfe der Verbindungseinrichtung können einander zugeordnete Messarmglieder des Messarms und Gliederelemente des Gelenkarms, die in der jeweiligen seriellen Anordnung nicht endseitig angeordnet sind, beim Betrieb der Anordnung für den Knickarmroboter zeitweise miteinander verbunden werden. Dieses bedeutet, dass die lösbare Verbindung in einem Bewegungsabschnitt bestehen kann, wohingegen in einem hierauf folgenden Bewegungsabschnitt die Verbindung wieder gelöst ist. Auf diese Weise kann sichergestellt werden, dass der Messarm auch in singulären Stellungen der Gelenke des Gelenkarms der Bewegung des Gelenkarms folgt, auch wenn aufgrund einer solchen singulären Stellung eine gewisse Wahrscheinlichkeit besteht, dass dies nicht der Fall sein könnte. Mithilfe der Verbindungseinrichtung wird diese Wahrscheinlichkeit für ein Nichtfolgen überwunden. Es ist sichergestellt, dass der Messarm in jeder Stellung der Gelenke der Bewegung des Gelenkarms folgt. Die Verbindungseinrichtung kann beispielsweise eingerichtet sein, die lösbare Verbindung als eine Klemmverbindung auszubilden.

Die lösbare Verbindung ist mittels zugeordneter Steuersignale und / oder manuell aktivierbar und deaktivierbar, so dass die Verbindung auf die Aktivierung / Deaktivierung ausgebildet oder gelöst wird. Im Fall der manuellen Aktivierung wird die lösbare Verbindung manuell hergestellt, um diese später wieder zu lösen, beispielsweise dann, wenn für eine folgende Bewegung der Anordnung für den Knickarmroboter keine Wahrscheinlichkeit dafür besteht, dass der Messarm bei dieser Bewegung der Bewegung des Gelenkarms nicht folgen würde. Die zugeordneten Steuersignale zum Aktivieren und zum Deaktivieren können zum Beispiel in Abhängigkeit von Winkelstellungen eines oder mehrerer der Messarmgelenke erzeugt werden. Hierbei kann die jeweilige Winkelstellung eines oder mehrerer der Messarmgelenke herangezogen werden, um die lösbare Verbindung zu aktivieren oder zu deaktivieren, also zu schließen oder zu öffnen. Alternativ oder ergänzend können Messsignale für Gelenkstellungen der Gelenke des Gelenkarms zum Bestimmen einer Stellung herangezogen werden, die die Aktivierung der lösbaren Verbindung auslöst.

Die Gliederelemente des Gelenkarms können ein Elementgehäuse aufweisen, und der Messarm kann zumindest abschnittsweise in einem oder mehreren der Elementgehäuse angeordnet sein. Bei dieser Ausführungsform verlaufen beispielsweise Messarmgliederelemente des Messarms im Elementgehäuse.

Der Gelenkarm und der Messarm können jeweils mindestens fünf Drehachsen aufweisen, die mit den Gelenken und den Messarmgelenken bereitgestellt sind. In einer Ausführungsform weisen der Gelenkarm und der Messarm sechs oder mehr Gelenke mit zugeordneten Drehachsen auf.

Die Messarmgliederelemente können als Stäbe aus einem faserverstärkten Material bestehen. Hierbei können zum Beispiel kohlefaserverstärkte Materialien zum Einsatz kommen.

In Verbindung mit dem Verfahren zum Bestimmen einer Positionierung einer Aufnahme für einen Endeffektor eines Knickarmroboters können die vorangehend erläuterten alternativen Ausgestaltungen entsprechend vorgesehen sein.

Bei dem Verfahren kann die bestimmte Position des Endes des Gelenkarms mit der Aufnahme des Endeffektors mit einer Sollposition verglichen werden. Der Gelenkarm kann ergänzend bewegt werden, wenn die bestimmte Position von der Sollposition abweicht. Auf diese Weise ist eine Nachjustierung des Endes des Gelenkarms mit der Aufnahme des Endeffektors ausgehend von der für den Messarm bestimmten Positionierung ermöglicht. Es kann ein Regelungsmechanismus genutzt werden, um das Ende des Gelenkarms mit der Aufnahme für den Endeffektor in die Soll- oder Zielposition zu bringen. Für die Abweichung zwischen Sollposition und aktuell bestimmter Position kann eine zulässige Abweichung vorgegeben sein.

Bei dem Verfahren ist vorgesehen, dass eine Verbindungseinrichtung für ein oder mehrere nicht endseitige Messarmglieder des Messarms sowie nicht endseitige Gliederelemente des Gelenkarms aktiviert wird, wenn für den Gelenkarm und / oder den Messarm eine singuläre Armstellung bestimmt wird, die durch vorgegebene Stellungen für ein oder mehrere Gelenke / Messarmgelenke bestimmt ist, wobei beim Aktivieren der Verbindungseinrichtung eine oder mehrere lösbare Verbindungen zwischen den nicht endseitigen Messarmgliedern und den nicht endseitigen Gliederelementen paarweise ausgebildet werden. Im Laufe einer Bewegung des Knickarmroboters, die mehrere Bewegungsabschnitte oder -elemente aufweist, kann die lösbare Verbindung für einzelne oder mehrere Bewegungsabschnitte aktiviert werden, wohingegen die Verbindung in anderen Bewegungsabschnitten gelöst ist. Das Lösen oder Verbinden wird in Abhängigkeit von aktuell gemessenen Gelenkstellungen für die Messarmgelenke und / oder die Gelenke des Gelenkarms ausgeführt.

Bei dem Verfahren kann der Endeffektor im Betrieb manuell bewegt oder geführt werden, zum Beispiel für sogenannte "Teach In"-Zwecke. Hierbei können für die manuelle Bewegung Messwerte mittels eines Mehrachs-Last-Sensor gemessen werden, zum Beispiel mittels eines Sechsachs-Last-Sensors. Die Messwerte oder hiervon abgeleitete Parameter können mit zugeordneten Messwerten verglichen werden, die mittels des Messarms erfasst werden. Im Fall einer unzulässigen Abweichung der verglichenen Messwerte von Mehrachs-Last-Sensor und Messarm kann ein Warn- oder Notsignal ausgegeben werden, bis hin zum Blockieren des Weiterbetriebs des Knickarmroboters. Eine unzulässige Abweichung kann vorliegen, wenn die verglichenen Messwerte über vorbestimmte Grenzen hinaus voneinander abweichen.

### Beschreibung von Ausführungsbeipielen

Im Folgenden werden weitere Ausführungsbeispiele unter Bezugnahme auf eine Figur erläutert.

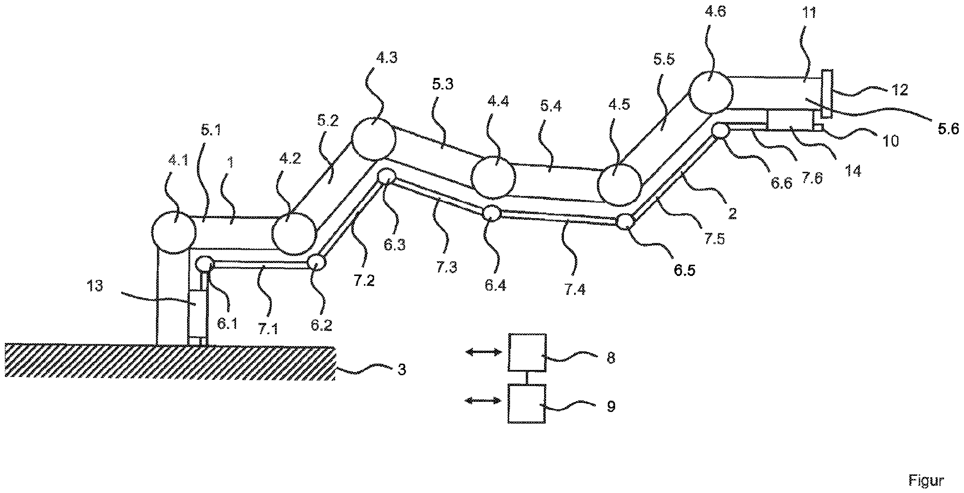

Die Figur zeigt eine schematische Darstellung einer Anordnung für einen Knickarmroboter mit einem Gelenkarm 1 und einem parallel hierzu ausgebildeten Messarm 2. Gelenkarm 1 und Messarm 2 bilden parallele Kinematiken (Parallelarmstruktur), derart, dass der Messarm 2 eine von dem Gelenkarm 1 ausgeführte Armbewegung (zwingend) nachverfolgt.

Der Gelenkarm ist auf einer Plattform 3 montiert und weist Gelenke 4.1, ..., 4.6 auf, die über Gliederelemente 5.1, ..., 5.6 seriell miteinander verbunden sind. Die Figur zeigt eine vereinfachte Darstellung. Abweichend hiervon können ein oder mehrere der Gliederelemente 5.1, ..., 5.6 unter unterschiedlichen Winkeln in die Zeichenebene hinein gerichtet sein, wie dies für Knickarmroboter als solches bekannt ist.

Der Messarm 2 weist Messgelenke 6.1, ..., 6.6 sowie diese seriell verbindenden Messarmgliederelemente 7.1, ..., 7.6 auf. Drehachsen der Messarmgelenke 6.1, ..., 6.6 sind koaxial zu den Drehachsen der Gelenke 4.1, ..., 4.6 angeordnet. Endseitige Gliederelemente 5.1, 5.6 sowie endseitige Messarmgliederelemente 7.1, 7.6 sind paarweise miteinander fest verbunden.

Werden Aktuatoren in den Gelenken 4.1, ..., 4.6 des Gelenkarms 1 mithilfe einer Steuereinrichtung 8 gesteuert, um den Gelenkarm 1 zu bewegen, so führt der Messarm 2 diese Bewegung gezwungen ebenso aus.

Die Messarmgelenke 6.1, ..., 6.6 weisen jeweils einen Drehgeber auf, der an eine Messeinrichtung 9 koppelt. Anhand der Messsignale der Drehgeber aus den Messarmgelenken 6.1, ..., 6.6 kann die Messeinrichtung 9 die Position und / oder die Orientierung eines Endes 10 des Messarms 2 bestimmen. Hieraus ist die Position und / oder die Orientierung eines Endes 11 des Gelenkarms 1 bestimmbar, an dem eine Aufnahme 12 für einen Endeffektor (nicht dargestellt) angeordnet ist, zum Beispiel ein Greifer oder ein Werkzeug. So ermöglicht die Positionsbestimmung mithilfe des Messarms 2 das Bestimmen der Position und / oder Orientierung der Aufnahme 12 für den Endeffektor, also schließlich eine Positions- und / oder Orientierungsbestimmung für einen Endeffektor der an der Aufnahme 12 montiert ist, beispielsweise ein Greifer.

Zum paarweisen Verbinden der endseitigen Gliederelemente 5.1, 5.6 sowie der endseitige Messarmgliederelemente 7.1, 7.6 sind Verbindungen 13, 14 vorgesehen, zum Beispiel in Form einer festen mechanischen Verbindung, die wahlweise lösbar sein kann.

Die Messarmgliederelemente 7.1, ..., 7.6 können beispielsweise als Stäbe ausgeführt sein, zum Beispiel aus einem faserverstärkten Material.

Die Aktuatoren der Gelenke können mithilfe von Servomotoren gebildet sein, bei denen die Antriebseinrichtungen steuerbar sind. Als Servomotor werden insbesondere Elektromotoren bezeichnet, die die Kontrolle der Winkelposition ihrer Motorwelle sowie wahlweise der Drehgeschwindigkeit und / oder der Beschleunigung erlauben. Sie weisen auf einen oder bestehen aus einem Elektromotor, der zusätzlich mit einem Sensor zur Positionsbestimmung ausgestattet ist. Die vom Sensor ermittelte Drehposition der Motorwelle kann kontinuierlich an eine meist außerhalb des eigentlichen Motors angebrachte Regelelektronik übermittelt werden, den so genannten Servoregler, der die Bewegung des Motors entsprechend einem oder mehreren einstellbaren Sollwerten - wie etwa Soll-Winkelposition der Welle oder Solldrehzahl - in einem Regelkreis regeln kann.

Um den Einfluss der Verformung der Gliederelemente 5.1, ..., 5.6 und der Aktuatoren auf die Positionsgenauigkeit des Gelenkarms 1 zu vermeiden, ist vorgeschlagen, die Messung der Position und Lage des Endeffektors von den Aktuatoren des Gelenkarms 1 zu entkoppeln. Hierzu ist das Messsystem mit dem Messarm 2 mit vorzugsweise hochauflösenden Drehgebern in den Messarmgelenken 6.1, ..., 6.6 parallel zum Gelenkarm 1 vorgesehen. Hierbei ist ein physischer Kontakt für das jeweils erste und letzte Gliederelement in der Kette des Gelenkarms 1 und des Messarms 2 vorgesehen.

Alternativ können auch nur Teile der Aktuatoren / Gelenkkette in die oben genannte Antriebskette des Gelenkarms 1 integriert werden. Die Achsen der Messarmgelenke 6.1, ..., 6.6 stimmen mit den Achsen der Gelenke 4.1, ..., 4.6 der Aktuatoren überein (beide Drehachsen sind koaxial). Hierbei kann auf Drehgeber von Servomotoren der gelenke 4.1, ..., 4.6 verzichtet werden. Die Regelung der Endeffektorposition wird mithilfe der Winkeldrehgeber in den Messarmgelenken 6.1, ..., 6.6 durchgeführt.

Für den Sonderfall der singulären Stellungen der einzelnen Gelenke könnte es ohne besondere Vorkehrungen vorkommen, dass der betreffende Messarm nicht der Aktuatorenkette folgt. Hierfür wird ein Klemmmechanismus, der nur für diese Stellungen eine feste Verbindung des betreffenden Gelenks mit dem Aktuatorgelenk hat, vorgeschlagen. Hierbei kann die Aktivierung dieser Klemmung mechanisch oder fremdaktiviert erfolgen.

Die Drehachsen des Messsystems mit dem Messarm 2 sind im Rahmen der Fertigungsgenauigkeit und Verformungsgenauigkeit koaxial mit den jeweiligen Achsen des Roboters sein.

In der Regel wird das System auf einem Sechs-Achs-Knickarmroboter angewendet. In diesem Fall wird das Messsystem mit dem festen Glied (Gestell) und dem Endeffektor verbunden. Da insgesamt eine Sechs-Achsen-Bewegung im Messsystem durchgeführt wird, muss das Messsystem in allen sechs Achsen am Endeffektor befestigt werden (feste Einspannung). Denkbar ist auch ein Fünf-Achs-Roboter. Hier wäre es nötig, damit keine Zwänge im Messsystem entstehen, nur fünf Achsen am Endeffektor festzuhalten - die Drehachse, dort wo die sechste Achse normalerweise wäre, müsste frei drehbar sein. Das Messsystem mit dem Messarm 2 weist dann auch nur fünf Winkeldrehgeber auf.

Alternativ können alle sechs Freiheitsgrade des Messsystems am Endeffektor gehalten und nur fünf Achsen am Anfang des Messsystems gehalten werden. Hierbei sollte der Freiheitsgrad der ersten Achse (vertikale Drehachse) frei gehalten werden.

Es kann vorgesehen sein, das Messsystem mit dem Messarm 2 nur für eine beschränkte Anzahl von Drehachsen zu verwenden. Zum Beispiel könnte das Messsystem an dem Messarmglied 7.1 zwischen Achse 1 und 2 (in den Messarmgelenken 6.1, 6.2) und an dem Messarmglied 7.5 liegen. In diesem Fall hätte das Messsystem vier Drehgeber, und das Ende des Messarms 2 müsste zwei Freiheitsgrade freigeben (4+2 = 6), damit eine eindeutige Lage festgehalten wird und keine Zwänge im Messsystem mit dem Messarm 2 entstehen.

Auch Roboter mit mehr als sechs Achsen, wie sie zum Beispiel im schwerelosem Raum eingesetzt werden, kann mit einem solchem Messsystem ausgestattet sein. Das Messsystem mit dem Messarm 2 hat dann nicht mehr als sechs Freiheitsgrade. Dann würde es nur sechs Achsen überspannen. Alternativ könnte das Messsystem mit dem Messarm 2 mehr als sechs Drehgeber haben, und eine Anzahl von Drehgeber, die mehr als sechs sind, kann vom Gelenkarm 1 mit einem Freiheitsgrad geführt werden.

Die Positionsgenauigkeit ist nicht durch die Steifigkeit der Antriebskette des Gelenkarms 1 beeinflusst. Die Steifigkeit und somit auch die Masse der Antriebskette kann reduziert werden. Durch die geringere Masse des Gelenkarms 1 ist die Verletzungsgefahr geringer. Somit ist ein Roboter mit dem Gelenkarm 1 und dem Messarm 2 eher als ein mit dem Menschen kollaborierender Roboter geeignet. Wegen der geringeren Masse können auch die Aktuatoren schwächer ausgelegt werden, was eine Preisreduzierung zur Folge hat.

Da bei dem Gelenkarm 1 die Position des Aktuators nicht über den Drehgeber des Aktuators bestimmt werden muss, kann auf einen Servoaktuator, zum Beispiel ein Servomotor, verzichtet werden. Gewöhnliche Antriebe ohne Winkelgeber können eingesetzt werden.

Durch die höhere Positionsgenauigkeit sind der Gelenkarm 1 und der Messarm 2 ist ein hiermit ausgestatteter Roboter auch als Werkzeugmaschine, zum Beispiel Fräsmaschine, geeignet.

Wird dennoch in die Aktuatoren des Gefenkarms 2 ein Winkelgeber integriert, kann über die Differenz in der Soll- / Istposition und die Steifigkeit der Maschine die an den einzelnen Aktuatoren auftretende Last als auch auf die am Endeffektor auftretende Last berechnet werden. Bei kollaborierenden Robotern kann eine übermäßig hohe Last ermittelt werden, und die Maschine kann als Reaktion hierauf abgeschaltet werden. Somit kann die Verletzungsgefahr herabgesetzt werden.

Arbeitslasten wie Schnittkräfte können in der Fertigung zur Optimierung des Werkzeugeinsatzes genutzt werden.

Wird der Endeffektor für sogenannte "Teach In"-Zwecke manuell bewegt, können für die manuelle Bewegung mittels eines Mehrachs-Last-Sensor, zum Beispiel einem Sechsachs-Last-Sensor, Messwerte gemessen werden. Die Messwerte oder hiervon abgeleitete Parameter können mit Messwerten verglichen werden, die mittels des Messarms erfasst werden. Im Fall einer unzulässigen Abweichung der verglichenen Messwerte von Mehrachs-Last-Sensor und Messarm kann ein Warn- oder Notsignal ausgegeben werden, bis hin zum Blockieren des Weiterbetriebs des Knickarmroboters.
zum online Programmieren kann mit dieser Entwicklung implementiert werden (alternativ zu einem Mehrachs-Last-Sensor).

## Patentansprüche

1. Anordnung für einen Knickarmroboter, mit
- einem Gelenkarm (1), mit
- Gelenken (4.1,...,4.6), die jeweils eine Gelenkachse aufweisen;
- Aktuatoren, die jeweils einem der Gelenke (4.1,... ,4.6) zugeordnet sind;
- Gliederelementen (5.1,...,5.6), die die Gelenke (4.1,...,4.6) in einer seriellen Gelenkarmanordnung verbinden; und
- einer Aufnahme (12) für einen Endeffektor, die an einem Ende des Gelenkarms (1) angeordnet und eingerichtet ist, einen Endeffektor aufzunehmen;
- einem Messarm (2), mit
- Messarmgelenken (6.1,...,6.6), die jeweils eine Messarmgelenkachse aufweisen, die sich koaxial zur Gelenkachse eines zugeordneten Gelenks des Gelenkarms (1) erstreckt;
- Drehgebern, die jeweils einem der Messarmgelenke zugeordnet sind; und
- Messarmgliederelementen (7.1,...,7.6), die die Messarmgelenke (6.1,...,6.6) in einer seriellen Messarmanordnung verbinden;
wobei Gelenkarm (1) und Messarm (2) eine parallele Kinematik bilden, bei der das Ende des Gelenkarms (1) mit einem Ende des Messarms (2) sowie ein gegenüberliegendes Ende des Gelenkarms (1) mit einem gegenüberliegenden Ende des Messarms (2) verbunden sind;
- einer Steuereinrichtung (8), die eingerichtet ist, die Aktuatoren der Gelenke (4.1,...,4.6) zum Bewegen des Gelenkarms (1) zu steuern; und
- einer Messeinrichtung (9), die eingerichtet ist, unter Einbeziehung von Messsignalen der Drehgeber der Messarmgelenke (6.1,...,6.6) eine Position und / oder Orientierung des Endes des Messarms (2) und so eine Position und / oder Orientierung des Endes des Gelenkarms (1) mit der Aufnahme (12) des Endeffektors zu bestimmen;
wobei einem oder mehreren der nicht endseitigen Messarmglieder (7.1,...,7.6) des Messarms (2) und der nicht endseitigen Gliederelemente (5.2,...,5.5) des Gelenkarms (1) eine Verbindungseinrichtung zugeordnet ist, die eingerichtet ist, für die nicht endseitigen Messarmglieder (7.1,...,7.6) sowie die nicht endseitigen Gliederelemente (5.2,...,5.5) paarweise eine lösbare Verbindung auszubilden, die mittels zugeordneter Steuersignale und / oder manuell aktivierbar und deaktiviebar ist, so dass die Verbindung auf die Aktivierung / Deaktivierung ausgebildet oder gelöst wird.

2. Anordnung nach Anspruch 1, **dadurch gekennzeichnet, dass** die Aktuatoren der Gelenke (4.1,... ,4.6) jeweils frei von einem Drehgeber gebildet sind.

3. Anordnung nach Anspruch 1, **dadurch gekennzeichnet, dass** die Aktuatoren der Gelenke (4.1,...,4.6) jeweils einen Drehgeber aufweisen.

4. Anordnung nach mindestens einem der vorangehenden Ansprüche, **dadurch gekennzeichnet, dass** die Gliederelemente (5.2,...,5.5) des Gelenkarms (1) ein Elementgehäuse aufweisen und der Messarm (2) zumindest abschnittsweise in einem oder mehreren der Elementgehäuse angeordnet ist.

5. Anordnung nach mindestens einem der vorangehenden Ansprüche, **dadurch gekennzeichnet, dass** der Gelenkarm (1) und der Messarm (2) jeweils mindestens fünf Drehachsen aufweisen, die mit den Gelenken ((4.1,...,4.6) und den Messarmgelenken (6.1,... ,6.6) bereitgestellt sind.

6. Anordnung nach mindestens einem der vorangehenden Ansprüche, **dadurch gekennzeichnet, dass** die Messarmgliederelemente (7.2,...,7.5) als Stäbe aus einem faserverstärkten Material bestehen.

7. Verfahren zum Bestimmen einer Positionierung einer Aufnahme für einen Endeffektor eines Knickarmroboters mit
- einem Gelenkarm (1), mit
- Gelenken (4.1,...,4.6), die jeweils eine Gelenkachse aufweisen;
- Aktuatoren, die jeweils einem der Gelenke (4.1,... ,4.6) zugeordnet sind;
- Gliederelementen (5.1,...,5.5), die die Gelenke (4.1,...,4.6) in einer seriellen Gelenkarmanordnung verbinden; und
- einer Aufnahme (12) für einen Endeffektor, die an einem Ende des Gelenkarms (1) angeordnet und eingerichtet ist, einen Endeffektor aufzunehmen; und
- einem Messarm (2), mit
- Messarmgelenken (6.1,...,6.6), die jeweils eine Messarmgelenkachse aufweisen, die sich koaxial zur Gelenkachse eines zugeordneten Gelenks des Gelenkarms (1) erstreckt;
- Drehgebern, die jeweils einem der Messarmgelenke (6.1,... ,6.6) zugeordnet sind; und
- Messarmgliederelementen (7.1,...,7.6), die die Messarmgelenke (6.1,...,6.6)in einer seriellen Messarmanordnung verbinden;
wobei das Verfahren die folgenden Schritte aufweist:
- Ausbilden einer parallelen Kinematik für Gelenkarm (1) und Messarm (2), bei der ein Ende des Messarms (2) mit dem Ende des Gelenkarms (1) sowie ein gegenüberliegendes Ende des Messarms (2) mit einem gegenüberliegenden Ende des Gelenkarms (1) verbunden wird;
- Bewegen des Gelenkarms (1) mittels Steuern der Aktuatoren der Gelenke (4.1,...,4.6) mit einer Steuereinrichtung, wobei der Messarm (2) hierbei parallel mitbewegt wird; und
- Erfassen von Messsignalen für die Drehgeber der Messarmgelenke (6.1,...,6.6) mittels einer Messeinrichtung; und
- Bestimmen einer Position und / oder Orientierung des Endes des Messarms (2) und so einer Position und / oder Orientierung des Endes des Gelenkarms (1) mit der Aufnahme des Endeffektors unter Einbeziehung der Messsignale mittels der Messeinrichtung;
wobei eine Verbindungseinrichtung für ein oder mehrere nicht endseitige Messarmglieder (7.2,...,7.5) des Messarms (2) sowie nicht endseitige Gliederelemente (5.2,...,5.5) des Gelenkarms (1) aktiviert wird, wenn für den Gelenkarm (1) und / oder den Messarm (2) eine singuläre Armstellung bestimmt wird, die durch vorgegebene Stellungen für ein oder mehrere der Gelenke / Messarmgelenke (4.1,...,4.6; 6.1,...,6.6) bestimmt ist, und wobei beim Aktivieren der Verbindungseinrichtung eine oder mehrere lösbare Verbindungen zwischen den nicht endseitigen Messarmgliedern (7.2,...,7.5) und den nicht endseitigen Gliederelementen (5.2,... ,5.5) paarweise ausgebildet werden.

8. Verfahren nach Anspruch 7, **dadurch gekennzeichnet, dass** die bestimmte Position des Endes des Gelenkarms (1) mit der Aufnahme (12) des Endeffektors mit einer Sollposition verglichen wird und der Gelenkarm (1) ergänzend bewegt wird, wenn die bestimmte Position von der Sollposition abweicht.

## Claims

1. An arrangement for a jointed arm robot, with
- a jointed arm (1), with
- joints (4.1, ..., 4.6), each of which comprises a joint axis;
- actuators, each of which is assigned to one of the joints (4.1, ..., 4.6);
- linking elements (5.1, ..., 5.6), which connect the joints (4.1, ..., 4.6) in a serial jointed arm arrangement; and
- a holder (12) for an end effector, which is arranged at one end of the jointed arm (1) and is configured to receive an end effector;
- a measuring arm (2), with
- measuring arm joints (6.1, ..., 6.6), each of which comprises a measuring arm joint axis, which extends coaxially to the joint axis of an assigned joint of the jointed arm (1);
- rotary encoders, each of which is assigned to one of the measuring arm joints; and
- measuring arm linking elements (7.1, ..., 7.6), which connect the measuring arm joints (6.1, ..., 6.6) in a serial measuring arm arrangement;
wherein the jointed arm (1) and the measuring arm (2) form a parallel kinematics, in which the end of the jointed arm (1) is connected to one end of the measuring arm (2) and an opposite end of the jointed arm (1) is connected to an opposite end of the measuring arm (2);
- a control device (8), which is configured to control the actuators of the joints (4.1, ..., 4.6) for moving the jointed arm (1); and
- a measuring device (9), which is configured, taking into account measuring signals of the rotary encoders of the measuring arm joints (6.1, ..., 6.6), to determine a position and/or orientation of the end of the measuring arm (2) and thus to determine a position and/or orientation of the end of the jointed arm (1) with the holder (12) of the end effector;
wherein a connection device is assigned to one or more of the non-end-side measuring arm links (7.1, ..., 7.6) of the measuring arm (2) and the non-end-side linking elements (5.2, ..., 5.5) of the jointed arm (1), which is configured to form a pairwise detachable connection for the non-end-side measuring arm links (7.1, ..., 7.6) and the non-end-side linking elements (5.2, ..., 5.5), wherein this connection can be activated and deactivated by means of assigned control signals and / or manually, so that the connection is formed or released on activation/deactivation.

2. The arrangement according to claim 1, **characterised in that** the actuators of the joints (4.1, ..., 4.6) are each formed free of a rotary encoder.

3. The arrangement according to claim 1, **characterised in that** the actuators of the joints (4.1, ..., 4.6) each comprise a rotary encoder.

4. The arrangement of at least one of the preceding claims, **characterised in that** the linking elements (5.2, ..., 5.5) of the jointed arm (1) comprise an element housing and the measuring arm (2) is arranged, at least section-wise, in one or more of the element housings.

5. The arrangement of at least one of the preceding claims, **characterised in that** the jointed arm (1) and the measuring arm (2) each comprise at least five rotary axes, which are provided by the joints (4.1, ..., 4.6) and the measuring arm joints (6.1, ..., 6.6).

6. The arrangement of at least one of the preceding claims, **characterised in that** the measuring arm linking elements (7.2, ..., 7.5) as rods consist of a fibre-reinforced material.

7. A method for determining a positioning of a holder for an end effector of a jointed arm robot with
- a jointed arm (1), with
- joints (4.1, ..., 4.6), each of which comprises a joint axis;
- actuators, each of which is assigned to one of the joints (4.1, ..., 4.6);
- linking elements (5.1, ..., 5.5), which connect the joints (4.1, ..., 4.6) in a serial jointed arm arrangement; and
- a holder (12) for an end effector, which is arranged at one end of the jointed arm (1) and is configured to receive an end effector; and
- a measuring arm (2), with
- measuring arm joints (6.1, ..., 6.6), each of which comprises a measuring arm joint axis, which extends coaxially to the joint axis of an assigned joint of the jointed arm (1);
- rotary encoders, each of which is assigned to one of the measuring arm joints (6.1, ..., 6.6); and
- measuring arm linking elements (7.1, ..., 7.6), which connect the measuring arm joints (6.1, ..., 6.6) in a serial measuring arm arrangement;
wherein the method comprises the following steps:
- forming a parallel kinematics for the jointed arm (1) and the measuring arm (2), in which one end of the measuring arm (2) is connected to the end of the jointed arm (1) and an opposite end of the measuring arm (2) is connected to an opposite end of the jointed arm (1);
- moving the jointed arm (1) by means of controlling the actuators of the joints (4.1, ..., 4.6) with a control device, wherein the measuring arm (2) is moved in parallel together therewith; and
- recording measuring signals for the rotary encoders of the measuring arm joints (6.1, ..., 6.6) by means of a measuring device; and
- determining a position and/or orientation of the end of the measuring arm (2) and thus a positon and/or orientation of the end of the jointed arm (1) with the holder of the end effector taking into account the measuring signals by means of the measuring device;
wherein a connection device is activated for one or more non-end-side measuring arm links (7.2, ..., 7.5) of the measuring arm (2) and for non-end-side linking elements (5.2, ..., 5.5) of the jointed arm (1) if, for the jointed arm (1) and/or the measuring arm (2), a singular arm position is determined, which is determined by predefined positions for one or more of the joints / measuring arm joints (4.1, ..., 4.6; 6.1, ..., 6.6), and wherein during activation of the connection device one or more detachable connections are formed pairwise between the non-end-side measuring arm links (7.2, ..., 7.5) and the non-end-side linking elements (5.2, ..., 5.5).

8. The method according to claim 7, **characterised in that** the determined position of the end of the jointed arm (1) with the holder (12) of the end effector is compared to a required position and **in that** the jointed arm (1) is moved supplementary if the determined position deviates from the required position.

## Revendications

1. Ensemble, destiné à un robot à bras articulé, comprenant
- un bras articulé (1), comprenant
- des articulations (4.1, ..., 4.6) dont chacune comporte un axe d'articulation,
- des actionneurs, dont chacun est associé à l'une des articulations (4.1, ..., 4.6) ;
- des maillons (5.1, ..., 5.6) qui relient les articulations (4.1, ..., 4.6) selon une configuration sérielle de bras articulé ; et
- un logement (12) pour un effecteur final, qui est placé sur une extrémité du bras articulé (1) et qui est aménagé pour recevoir un effecteur final,
- un bras de mesure (2), comprenant
- des articulations de bras de mesure (6.1, ..., 6.6), dont chacun comporte un axe d'articulation de bras de mesure qui s'étend de manière coaxiale par rapport à l'axe d'articulation d'une articulation associée du bras articulé (1) ;
- des générateurs rotatifs, dont chacun est associé à l'une des articulations de bras de mesure ;
- et des maillons de bras de mesure (7.1, ..., 7.6), qui relient les articulations de bras de mesure (6.1, ..., 6.6) selon une configuration sérielle de bras de mesure ;
le bras articulé (1) et le bras de mesure (2) formant une cinématique parallèle selon laquelle l'extrémité du bras articulé (1) est reliée avec une extrémité du bras de mesure (2), et une extrémité opposée du bras articulé (1) est reliée avec une extrémité opposée du bras de mesure (2) ;
- un système de commande (8), qui est aménagé pour commander les actionneurs des articulations (4.1, ..., 4.6) afin de déplacer le bras articulé (1) ; et
- un système de mesure (9), qui est aménagé pour déterminer en impliquant des signaux de mesure des générateurs rotatifs des articulations de bras de mesure (6.1, ..., 6.6) une position et / ou une orientation de l'extrémité du bras de mesure (2) et ainsi une position et / ou une orientation de l'extrémité du bras articulé (1) avec le logement (12) de l'effecteur final ;
à un ou à plusieurs des maillons de bras de mesure (7.1, ..., 7.6) non placés aux extrémités du bras de mesure (2) et des maillons (5.2, ..., 5.5) non placés aux extrémités du bras articulé (1) étant associé un système de liaison qui est aménagé pour former par paires avec les maillons non situés aux extrémités du bras de mesure (7.1, ..., 7.6) ainsi qu'avec les maillons (5.2, ..., 5.5) non situés aux extrémités une liaison désolidarisable, qui est activable ou désactivable à l'aide de signaux de commande et / ou manuellement, de sorte que la liaison se créé ou se désolidarise suite à l'activation / la désactivation.

2. Ensemble selon la revendication 1, **caractérisé en ce que** chacun des actionneurs des articulations (4.1, ..., 4.6) est exempt d'un générateur rotatif.

3. Ensemble selon la revendication 1, **caractérisé en ce que** chacun des actionneurs des articulations (4.1, ..., 4.6) comporte un générateur rotatif.

4. Ensemble selon au moins l'une quelconque des revendications précédentes, **caractérisé en ce que** les maillons (5.2, ..., 5.5) du bras articulé (1) comportent un boîtier et **en ce que** le bras de mesure (2) est placé au moins par endroits dans un ou dans plusieurs des boîtiers.

5. Ensemble selon au moins l'une quelconque des revendications précédentes, **caractérisé en ce que** le bras articulé (1) et le bras de mesure (2) comportent chacun au moins cinq axes de rotation, qui sont mis à disposition avec les articulations (4.1, ..., 4.6) et avec les articulations de bras de mesure (6.1, ..., 6.6).

6. Ensemble selon au moins l'une quelconque des revendications précédentes, **caractérisé en ce que** les maillons de bras de mesure (7.2, ..., 7.5) consistent dans des barrettes en une matière renforcée par fibres.

7. Procédé, destiné à déterminer un positionnement d'un logement pour un effecteur final d'un robot à bras articulé comprenant
- un bras articulé (1), comprenant
- des articulations (4.1, ..., 4.6) dont chacune comporte un axe d'articulation,
- des actionneurs, dont chacun est associé à l'une des articulations (4.1, ..., 4.6) ;
- des maillons (5.1, ..., 5.5) qui relient les articulations (4.1, ..., 4.6) selon une configuration sérielle de bras articulé ; et
- un logement (12) pour un effecteur final, qui est placé sur une extrémité du bras articulé (1) et qui est aménagé pour recevoir un effecteur final ; et
- un bras de mesure (2), comprenant
- des articulations de bras de mesure (6.1, ..., 6.6), dont chacun comporte un axe d'articulation de bras de mesure qui s'étend de manière coaxiale par rapport à l'axe d'articulation d'une articulation associée du bras articulé (1) ;
- des générateurs rotatifs, dont chacun est associé à l'une des articulations de bras de mesure (6.1, ..., 6.6) ; et
- des maillons de bras de mesure (7.1, ..., 7.6), qui relient les articulations de bras de mesure (6.1, ..., 6.6) selon une configuration sérielle de bras de mesure ;
le procédé comportant les étapes suivantes consistant à :
- créer une cinématique parallèle du bras articulé (1) et du bras de mesure (2), selon laquelle on relie l'extrémité du bras articulé (1) avec une extrémité du bras de mesure (2), et une extrémité opposée du bras articulé (1) avec une extrémité opposée du bras de mesure (2) ;
- déplacer le bras articulé (1) en commandant les actionneurs des articulations (4.1, ..., 4.6) à l'aide d'un système de commande, à cet effet, le bras de mesure (2) étant co-déplacé à la parallèle ; et
- détecter des signaux de mesure pour le générateur rotatif des articulations de bras de mesure (6.1, ..., 6.6) à l'aide d'un système de mesure ; et
- déterminer une position et / ou une orientation de l'extrémité du bras de mesure (2) et ainsi une position et / ou une orientation de l'extrémité du bras articulé (1) avec le logement de l'effecteur final en impliquant les signaux de mesure du système de mesure ;
un système de liaison pour un ou plusieurs des maillons de bras de mesure (7.2, ..., 7.5) non placés aux extrémités du bras de mesure (2) et des maillons (5.2, ..., 5.5) non placés aux extrémités du bras articulé (1) étant activé si une position de bras singulière est déterminée pour le bras articulé (1) et/ou pour le bras de mesure (2) qui est déterminée pour des positions prédéfinies pour une ou plusieurs articulations/ articulations de bras de mesure (4.1, ..., 4.6; 6.1, ..., 6.6), et lors de l'activation du système de liaison, une ou plusieurs liaisons désolidarisables étant créée(s) par paires entre les maillons de bras de mesure (7.2, ..., 7.5) non situés aux extrémités et les maillons (5.2, ..., 5.5) non situés aux extrémités.

8. Procédé selon la revendication 7, **caractérisé en ce que** l'on compare la position déterminée de l'extrémité du bras articulé (1) avec le logement (12) de l'effecteur final avec une position de consigne et **en ce que** l'on déplace complémentairement le bras articulé (1) si la position déterminée diverge de la position de consigne.
